# EUROPEAN PATENT APPLICATION

(11) **EP 4 796 782 A1**
(43) Date of publication of application: **26.08.2026**
(21) Application number: 25305236.9
(22) Date of filing: 21.02.2025
(51) Int. Cl.: F03D 7/04

(54) **A CONTROL METHOD FOR CONTROLLING A WIND FARM, RELATED COMPUTER PROGRAM PRODUCT AND ELECTRONIC CONTROL SYSTEM**

(71) Applicant: TotalEnergies OneTech, 92400 Courbevoie (FR); Institut Mines Telecom, 91120 Palaiseau (FR)
(72) Inventor: KADOCHE, ELIE, 92400 COURBEVOIE (FR)
(74) Representative: Lavoix

(57) **Abstract**

The present invention concerns a control method (100) for controlling a wind farm comprising a plurality of wind turbines.

The method comprises a learning phase (1100) and an exploitation phase (1200).

During the learning phase receiving (1110) a model architecture is received. The model architecture comprises an attention comprising at least on multi-head self-attention neural network. The learning phase further comprises training (1120) the model architecture according to a reinforcement learning technic implying tuning the tunable parameters of the model architecture to obtain a trained model optimizing a performance of the wind farm. The performance of the wind farm depends on an estimated power output by the wind farm, and losses due to wake effect,

The exploitation phase comprises receiving (1210) estimated wind velocities and directions. The exploitation phase further comprises applying (1230) the trained model to derive rotations commands, and sending (1240) the rotation commands to wind turbines.

## Description

The present invention concerns a control method for controlling a wind farm.

The present invention in addition concerns a computer program product and an electronic control system configured to implement such a method.

The present invention concerns the domain of piloting the orientation of wind turbines within a wind farm to improve its productivity.

The productivity of a wind turbine, i.e. the generated power, depends mainly on the velocity of the wind and its direction with respect to the wind turbine.

In particular, a wind turbine only produces energy if the wind reaching the wind turbine has a direction within a specific respective range. In particular, it is known the optimal wind production is reached when the wind turbine is facing the wind direction.

However, the wind reaching the wind turbine does not always have the same direction.

Thus, to improve the production of the wind turbine, it is known to control its yaw angle, i.e. its rotation along an elongation axis of the wind turbine, via a yaw actuator, to try to reach an optimal direction of the wind on blades of the wind turbine.

When considering a farm of wind turbines, it is known to measure the wind velocity and direction at a point close to the wind farm. From this measurement, it is known to apply a control technique, at each time instant, consisting in commanding the yaw angle of each turbine to have each wind turbine tracking said measured wind direction.

However, this technique faces two mains issues that make it strongly suboptimal.

Firstly, wind turbines are massive elements, so that the variation of their yaw angle cannot be greater than a certain threshold, e.g. few degrees by minute. Thus, if the wind direction is changing rapidly, it is not possible for the wind turbine to track such changes properly. In other words, in this case, the yaw actuators are always late compared the wind changes. Thus, at each time, the wind turbines do not have the appropriate yaw angle, with respect to the wind direction.

Secondly, such control technique does not consider the wake effect of the wind turbines. Actually, in a wind farm, when wind flows through a first wind turbine, the wind loses energy by driving the blades of the first turbines, inducing a wind velocity decrease and a local wind direction variation. Such decrease depends on the yaw orientation of the first wind turbine and on the direction and velocity of the wind facing said first wind turbine. Thus, a second wind turbine receiving the wind influenced by the first wind turbine, i.e. its local wind, would not have the same optimal yaw inclination as the first wind turbine.

Due to the two previously presented issues, said control technique, consisting in trying to track the direction of the wind on the wind farm, leads to a suboptimal energy production of the wind farm.

It is also known to control the wind farm based on a neural network-based controller that has been trained to take into consideration the wake effect when determining the optimal yaw angle of each wind turbine.

To become operational, such a neural network requires training data. Such training data may be obtained via simulation that would evaluate for each wind turbine, the corresponding wake effect on the other wind turbine.

However, to evaluate the wake effect some simulators are needed. These simulators requires a lot of time to produce their results. Since the quality of the trained neural network mainly depends on the amount of training data that are used, training such neural network is strongly time consuming, making it not implementable in an industrial context.

It thus exists a need for a better control method that would take into consideration the wake effect while being realistic to be implemented in an industrial context.

To this end, the invention concerns a control method for controlling a wind farm comprising a plurality of wind turbines, based on a plurality of estimated general wind velocities and a plurality of estimated wind directions of the wind on the wind farm,
each wind turbine having an orientation forming, with the wind directions, an angle denoted yaw angle,
each wind turbine being configured, upon receiving a rotation command, to rotate, around an elongation axis respective of the wind turbine, according to said rotation command,
the method being implemented by an electronic control system and comprising a learning phase comprising the following steps:
   - receiving a model architecture forming a structure of a model aiming at being configured to determine, for each wind turbine, the rotation command as a function of inputs representatives of the estimated wind velocities, the estimated wind direction and the current yaw angles,
      the model architecture comprising several neural network units including respectively tunable parameters, at least one these unit being an attention unit comprising at least on multi-head self-attention neural network,
   - training the model architecture according to a reinforcement learning technic implying tuning the tunable parameters of the model architecture to obtain a trained model optimizing a performance of the wind farm, the performance of the wind farm depending on:
      ∘ **an estimated** power output by the wind farm, and
      ∘ losses due to wake effect if each wind turbine of the wind farm would be aligned with the wind direction,
the method further comprises an exploitation phase comprising the following steps:
   - receiving the estimated wind velocity and the estimated direction for each time instant of the successive time instants, and the current yaw angle of each wind turbine,
   - applying the trained model to parameters formed from the received wind velocities, wind directions, and current yaw angles, to derive, for each wind turbine, the respective rotation command,
   - sending to each wind turbine, the respective rotation command for the rotation of the wind turbine.

Based on the attention unit, the training of the model architecture is strongly accelerated. Actually, attention units, which are mainly used in other fields, such as Natural Language Programming, make it possible to determine a relative importance of the input data with each other, thus making the tunable parameters of the model converging way faster than in classic neural network training.

According to specific embodiment of the invention, the control method comprises one or more of the following features, taken solely, or according to any feasible combination:
- each wind turbine is able to output power only if its yaw angle is within a predefined range,
   the performance of the wind farm comprising, for each time instant of the set of successive time instants, a reward,
   each reward) comprising: a power component and a misalignment component, the power component depending on said estimated power and estimated losses for the wind turbines having a respective yaw angle within the predefined range, the misalignment component depending on the yaw angle of each wind turbine having a respective yaw angle out of the predefined range;
- the power component depends:
   ∘ on the power output by the wind farm, if said power is greater than the power output by a respective wind farm having each of its wind turbines aligned with the wind direction, or
   ∘ on said power output by the wind farm and on the losses due to wake effect, else case;
- the power component is equal to: 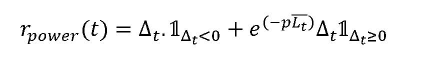 with ${Δ}_{t} = \left(\frac{{P}_{t} - \overline{{P}_{t}}}{\overline{{P}_{t}} + ϵ}\right) ,$ where:
   ∘ *Pₜ* is the estimated power output by the wind farm,
   ∘ *P̅ₜ* is the power output by the wind farm if each wind turbine is aligned with the estimated wind direction,
   ∘ *ε* is a predefined constant,
   ∘ 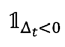 is the indicative function which is equal to 1 if the value Δ*ₜ* is strictly negative and 0 else case,
   ∘ *L̅ₜ̅* is the losses due to wake effect if each wind turbine of the wind farm would be aligned with the estimated wind direction,
   ∘ *p* is a predefined constant, and
   ∘ 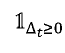 is the indicative function which is equal to 1 if the value Δ*ₜ* is greater or equal to zero, and 0 else case;
- the misalignment component is equal to: 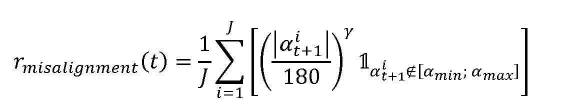 **where:**
   ∘ *J* is the number of wind turbines in the wind farm,
   ∘ ${α}_{t + 1}^{i}$ is the yaw angle of the i-th wind turbine at the time instant *t +* 1,
   ∘ ${Σ}_{i = 1}^{J}$ is the sum for each wind turbine,
   ∘ *γ* is a predefined discount factor,
   ∘ 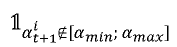 is the indicative function which is equal to 1 if the yawn angle ${α}_{t + 1}^{i}$ is out of the predefined range, and zero else case;
- the model architecture and the trained model are configured to receive as input a graph representative of the influence of the wind turbines on each other,
   the exploitation phase, further comprising an obtaining step of the graph, said graph depending the current wind direction,
   during the applying step, the trained model being further applied to the obtained graph;
- the model architecture and the trained model are configured to receive as input:
   o current wind parameters including the current wind velocity and the current wind direction,
   ∘ wind forecast parameters including the estimated wind directions and the estimated wind velocities of each further instant in the set of successive time instants,
   o yaw angle parameters comprising a current value of a yaw angle of each wind turbine;
- the model architecture comprises:
   o for each input, an embedding unit configured to form, for each of input, an embedding in a latent space,
      each embedding being a vector having the same number of component as the other embeddings,
   o a merging unit configured to merge the embeddings, to form, for each wind turbine, a respective merged embedding,
   ∘ the attention unit configured to enhance each merged embedding, and
   ∘ one or more post-treatment units configured to provide some values representative of the control rotations, as a function of an output of the attention unit;
- for; current wind parameters, the wind forecast parameters and the yaw angle parameters, the respective embedding unit comprises a fully connected neural network,
   the embedding unit respective of the graph comprising a Graph Attention Network;
- the merging unit is configured to sum, for each wind turbine, embedding of the yaw angle parameters of this wind turbine, with the embedding of the current wind parameters, the embedding of the wind forecast parameters, and the embedding of the graph, to form, for said wind turbine, the respective merged embedding;
- the post treatment units comprises an actor sub-unit,
   the actor sub unit is configured to provide, from a respective enhanced embedding, a measure of location and, a measure of concentration, of respective rotation commands following a Von Mises probability law;
- during the applying step of the exploitation phase, each rotation command is derived as the corresponding measure of location;
- the graph comprises nodes and directed edges, each directed edge extending from a node to another node,
   each node corresponding to a wind turbine of the wind farm, to each node being associated the current yaw angle of the corresponding wind turbine,
   to each directed edges being associated:
      ∘ a distance between the two wind turbines connected by said directed edge, and
      o an angle formed between the estimated wind direction at the current instant and a segment linking said two wind turbines in the wind farm;

The present invention also concerns a computer program product comprising software instructions which, when being executed by a computer system, implement such a control method.

The present invention also concerns an electronic control system for controlling a wind farm comprising a plurality of wind turbines, based on a plurality of estimated general wind velocities and a plurality of estimated wind directions of the wind on the wind farm,
each wind turbine having an orientation forming, with the wind directions, an angle denoted yaw angle,
each wind turbine being configured, upon receiving a rotation command, to rotate, around an elongation axis respective of the wind turbine, according to said rotation command,
the electronic control system comprising an electronic learning device comprising:
   - a first rereiving module configured to receive a model architecture forming a structure of a model aiming at being configured to determine, for each wind turbine, the rotation command as a function of inputs representatives of the estimated wind velocities, the estimated wind direction and the current yaw angles, the model architecture comprising several neural network units including respectively tunable parameters, at least one these unit being an attention unit comprising at least on multi-head self-attention neural network,
   - a first calculating module configured to train the model architecture according to a reinforcement learning technic implying tuning the tunable parameters of the model architecture to obtain a trained model optimizing a performance of the wind farm, the performance of the wind farm depending on:
      o an estimated power output by the wind farm, and
      o losses due to wake effect if each wind turbine of the wind farm would be aligned with the wind direction,
the electronic control system further comprising an electronic control device comprising:
   - a second receiving module configured to receive the estimated wind velocity and the estimated direction for each time instant of the successive time instants, and the current yaw angle of each wind turbine,
   - a second calculating module configured to apply the trained model to parameters formed from the received wind velocities, wind directions, and current yaw angles, to derive, for each wind turbine, the respective rotation command,
   - a sending module configured to send, to each wind turbine, the respective rotation command for the rotation of the wind turbine.

The invention will be better understood upon reading the following description, only given as an example of embodiments of the invention, and in reference to the attached Figures, among which:
- Figure 1 is schematic view of wind farm comprising an electronic control system, according to the invention, for a controlling the wind farm;
- Figure 2 is a front view of a wind turbine belonging to the wind farm of Figure 1;
- Figure 3 is schematic top view of a wind turbine belonging to the wind farm of Figure 1;
- Figure 4 is schematic top view of the wind farm of figure 1 including a graphical representation of a graph of the wind farm;
- Figure 5 is schematic representation of a model architecture according to an embodiment of the invention; and

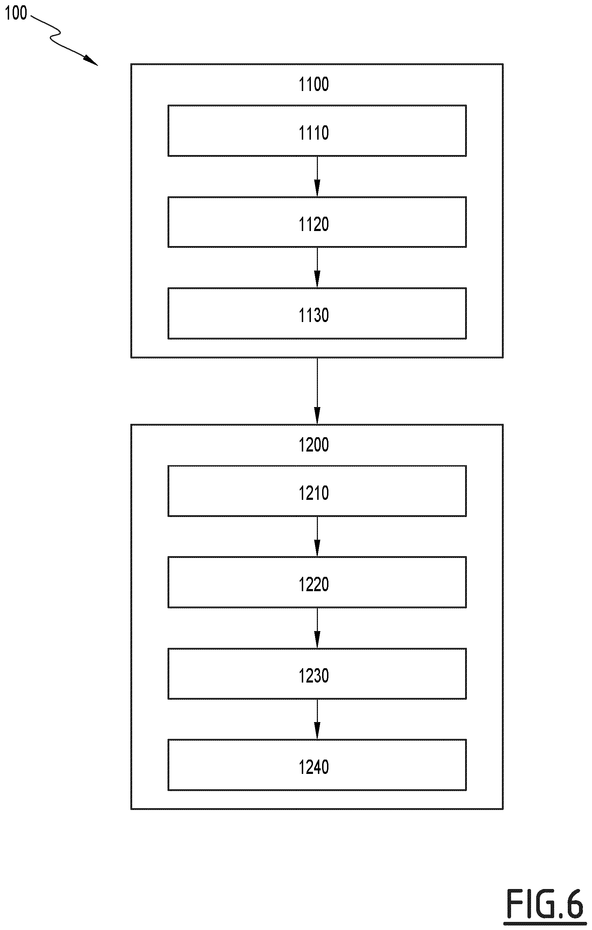

- Figure 6 is flowchart of a control method implemented by the electronic control system represented in Figure 1; and
- Figure 7 is result curves comparing the time to learn of the model with the method according to the invention and a model according to the state of the art with a method known in the art.

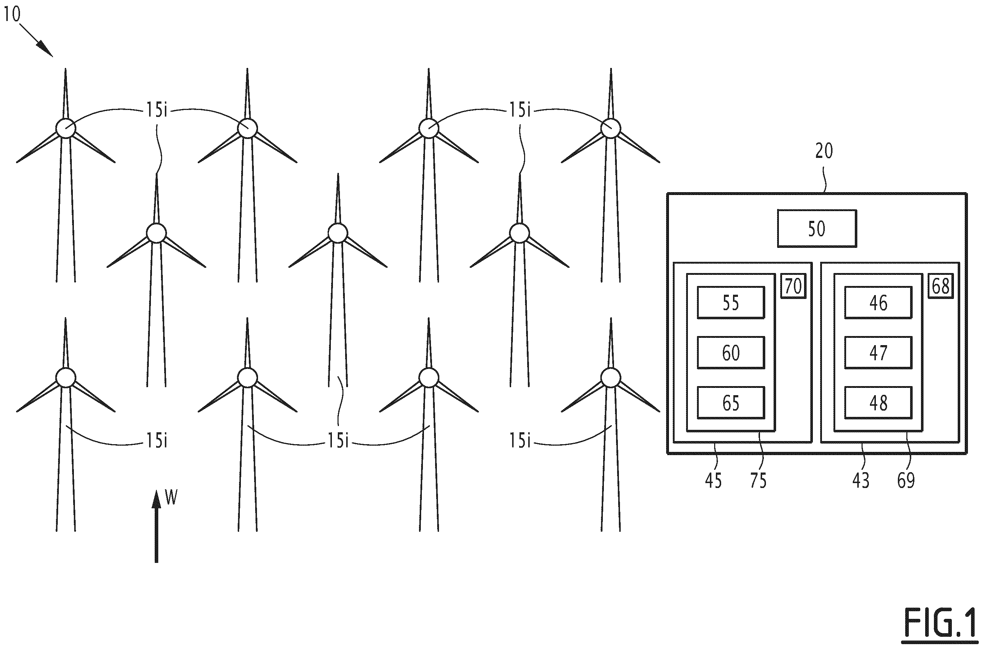

In Figure 1 is represented a wind farm 10. The wind farm 10 is for example on offshore wind farm. Alternatively, the wind farm 10 is an onshore wind farm.

The wind farm 10 comprises several wind turbines 15i, for example a number J of wind turbines 15i, with "i" evolving from 1 to J, and a control system 20. The number J is at least two, for example greater than ten, twenty, fifty or even a hundred.

As represented in figure 1, the wind turbines 15i of the wind farm 10 are for example bottom-fixed wind turbines, i.e. wind turbines comprising a monopile solidly fixed to the ground, or to the seabed in case of offshore wind turbine.

According to a non-shown variant, and only in the case of an offshore wind farm, the wind turbines are floating wind turbines, i.e. each wind turbine comprises a foundation floating on a water body and bearing the rest of the wind turbine.

**Alternatively,** and only in case of an offshore wind farm, the wind farm is mixed, comprising both bottom-fixed and floating wind turbines.

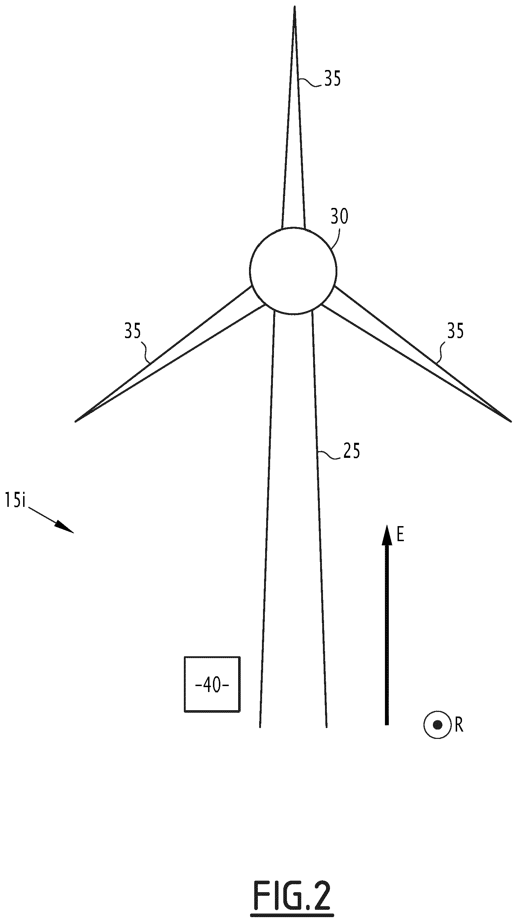

Figure 2 represents a front view of one wind turbine 15i of the wind farm 10.

The wind turbine 15i comprises a tower 25 extending along an elongation axis E.

The wind turbine 15i in addition comprises a rotor 30, for example located at an extremity of the tower 25. The rotor 30 comprises blades 35 configured to rotate around a rotation axis R, which is sensibly perpendicular to the elongation axis E.

In a known manner, the blades 35 are configured to be driven in rotation around the rotation axis R, by the wind W flowing through the wind turbine 15i. Then, under the effect of wind, the blades drive the rotor in rotation around the rotation axis R, thus producing electricity.

The wind turbine 15i in addition comprises a yaw actuator 40 connected to the control system 20.

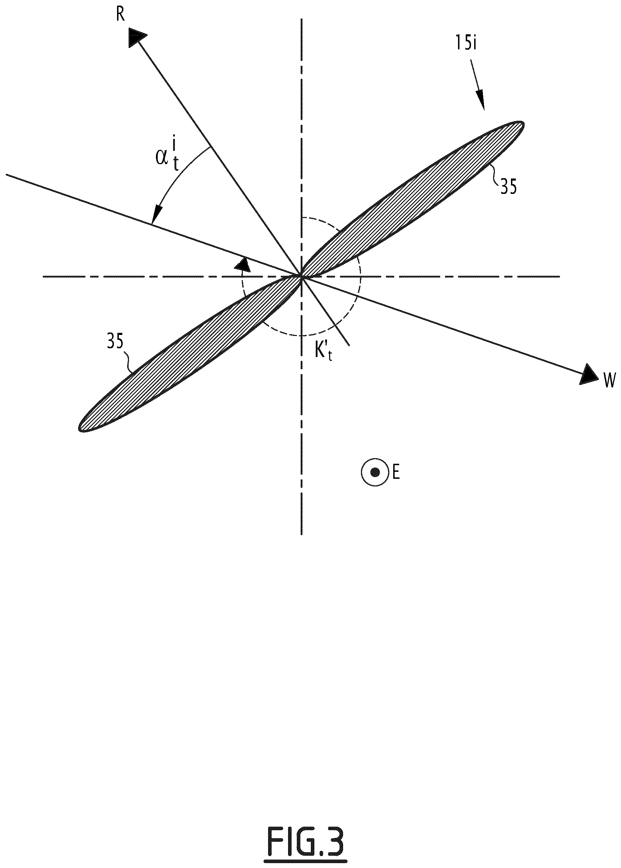

In reference to Figure 3, the yaw actuator 40 is configured, upon receiving a rotation command *uᵢ* from the control system 20, to make the wind turbine 15i, or at least its rotor 30, rotate around the elongation axis E by an angle defined in the received rotation command ${u}_{t}^{i}$, so that the rotor 30 reaches a yaw angle ${α}_{t + 1}^{i}$ at a new time instant.

As known *per se,* a wind turbine 15i can only output power if its yaw angle ${α}_{t}^{i}$ is comprised with a specific range [*αₘᵢₙ*; *αₘₐₓ*]. As an example, the two bounds of the specific range are -20° and +20°.

Back to Figure 1, the control system 20 comprises an electronic learning device 43, an electronic control device 45 and preferably a wind sensor 50.

The electronic learning device 43 is preferably geographically remote from the rest of the wind farm 10. The electronic learning device 43 is preferably remotely connected to the electronic control device 45.

The electronic learning device 43 preferably comprises a first receiving module 46, a first calculating module 47 and a first sending module 48.

The control device 45 is preferably located on the wind farm 10 location, close the wind turbines 15i. The electronic control device 45 is connected to the electronic learning device 43, to each wind turbine 15i and preferably to the wind sensor 50.

The control device 45 comprises a second receiving module 55, a second calculating module 60 and a second sending module 65.

The optional wind sensor 50 is configured to estimate the general wind velocity ${\left\{V{′}_{t + k}\right\}}_{k ∈ \left〚0; L\right〛}$ and direction ${\left\{K{′}_{t + k}\right\}}_{k ∈ \left〚0; L\right〛}$ on the wind farm 10, at plurality of successive time instants ${\left(t+k\right)}_{k ∈ \left〚0; L\right〛}$, where *Vₜ₊ₖ'* is the estimated wind velocity at time instant *t + k* and *Kₜ₊ₖ'* in the estimated wind direction at time instant *t + k.*

In the present application, the term "estimated" is used to mean both measured and predicted.

It is clear that the notation ${\left\{t+k\right\}}_{k ∈ \left〚0; L\right〛}$ represents a set of successive time instants comprising *L +* 1 time instants and starting by the initial time instant *t.* A delay between two successive time instants is for example constant, and preferably comprised between ten seconds and twenty minutes.

Alternatively, the delay between two successive time instants is not constant.

Thus the notation ${\left\{{a}_{k}\right\}}_{k ∈ \left〚0; L\right〛}$ is the set of successive elements *aₖ* for *k* evolving from 0 to L. It leads that ${\left\{t+k\right\}}_{k ∈ \left〚0; L\right〛}$ is equivalent to the set *t, t + 1, ..., t + L.* Similarly, ${\left\{V{′}_{t + k}\right\}}_{k ∈ \left〚0; L\right〛}$ is equivalent to the set *V'ₜ, V'*_{*t+*1}, ... , *V'_{t+L},* and ${\left\{K{′}_{t + k}\right\}}_{k ∈ \left〚0; L\right〛}$ is equivalent to the set *K'ₜ*, *K'*_{*t+*1}, ..., *K'_{t+L}.*

In particular, the wind sensor 50 is preferably configured to measure the general wind velocity *V'ₜ* and wind direction *K'ₜ* and an initial time instant *t,* and to predict the general wind velocity ${\left\{V{′}_{t + k}\right\}}_{k ∈ \left〚0; L\right〛}$ and direction ${\left\{K{′}_{t + k}\right\}}_{k ∈ \left〚0; L\right〛}$ for further time instants ${\left\{t+k\right\}}_{k ∈ \left〚0; L\right〛}$, via known forecast techniques. In the example shown in Figure 1, the learning device 43 is a computer. It comprises a processor 68 and a memory 69. In this example, the control device 45 is a computer. It comprises a processor 70 and a memory 75 associated with the processor 70.

In the example shown in Figure 1, the first receiving module 46, the first calculating module 47, the first sending module 48, the second receiving module 55, the second calculating module 60, and second the sending module 65, are each implemented in the form of software, or a software brick, and can be executed respectively by the processor 68 or 70. The memory 69 of the learning device 43 is then able to store a first receiving software, a first calculating software, and a first sending software. The memory 75 of the control device 45 is then able to store a second receiving software, a second calculating software, and a second sending software.

When the learning device 43 and the control device 45 are implemented in the form of one or more software programs, i.e. in the form of a computer program, they can also be recorded on a respective computer-readable medium (not shown). The computer-readable media are, for example, media capable of storing electronic instructions and of being coupled to a bus of a computer system. By way of example, the readable media are an optical disk, a magneto-optical disk, a ROM memory, a RAM memory, any type of nonvolatile memory (e.g. EPROM, EEPROM, FLASH, NVRAM), a magnetic card or an optical card. For each device 43, 45, a computer program containing software instructions is stored on the readable medium.

Alternatively, and not shown here, the first receiving module 46, the first calculating module 47, the first sending module 48, the second receiving module 55, the second calculating module 60, and second the sending module 65, are each implemented in the form of a programmable logic component, such as an FPGA (Field Programmable Gate Array), or an integrated circuit, such as an ASIC (Application Specific Integrated Circuit).

The first receiving module 46 is configured to receive a model architecture. The model architecture forms a structure of a model aiming at being configured to be applied to each wind turbine in order to determine, for said wind turbine 15i, the respective rotation command ${u}_{t}^{i}$ as a function of inputs representatives of the estimated wind velocities, the estimated wind direction and the current yaw angles.

According to an embodiment, said model is configured to admit, as inputs:
- current wind parameters *X_{Wₜ}* including a current value of the wind direction ${K}_{t}^{′}$ and a current value of the wind velocity ${V}_{t}^{′}$,
- wind forecast parameters *X_{Fₜ}* including estimated wind directions ${\left\{K{′}_{t + k}\right\}}_{k ∈ \left〚1; L\right〛}$ and estimated wind velocities ${\left\{V{′}_{t + k}\right\}}_{k ∈ \left〚1; L\right〛}$ of each further instant ${\left\{t+k\right\}}_{k ∈ \left〚1; L\right〛}$, and
- yaw angles parameters ${X}_{{α}_{t}^{i}}$ comprising a current value of the yaw angle ${α}_{t}^{i}$ of each wind turbine 15i, preferably as the sine and the cosine of this angle ${α}_{t}^{i}$.

According to an example, each quantity of said parameters *X_{Wₜ}*, *X_{Fₜ}*, and ${X}_{{α}_{t}^{i}}$ are normalized between -1 and 1.

Preferably, the model is configured to further admit, as input, a graph *G* representative of the influence of each wind turbines 15i on each other.

The graph *G* actually makes it possible to illustrate the wake effect induces by wind turbine upstream to wind turbine downstream.

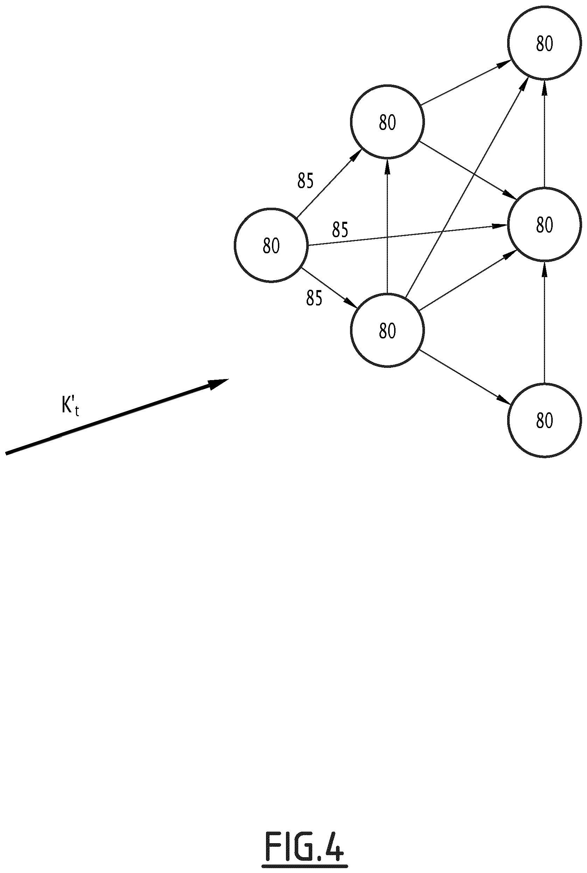

Figure 4 represents a top view of the wind farm 10 with graphical representation of the graph *G.* The graph *G* comprises nodes 80 and directed edges 85. Each directed edge 85 extends from a node 80 to another node 80. Each node 80 corresponds to a wind turbine 15i of the wind farm 10. In the graph *G,* to each node 80 is associated the current yaw angle ${α}_{t}^{i}$ of the corresponding wind turbine 15i. To each directed edges 85 is associated:
- a distance between the two wind turbines 15i connected by said directed edge 85, in the wind farm 10, and
- an angle *ζ^{i,j},* not shown, formed between the wind direction *Kₜ* and a segment linking said two wind turbines 15i, 15j in the wind farm 10.

Preferably, the directed edges 85 of the graph *G* link a wind turbine 15i upstream to a wind turbine 15j downstream in the wind direction *Kₜ.* In addition, preferably, two wind turbines 15i, 15j are linked by a directed edge 85 only if there distance in the wind farm 10 is lower than a predefined distance.

The model architecture comprises several neural network units including respectively tunable parameters.

Neural networks comprise an ordered succession of layers of neurons, each of which takes its inputs from the outputs of the previous layer.

More precisely, each layer comprises neurons taking their inputs from the outputs of the neurons in the previous layer, or from the input variables for the first layer.

Alternatively, more complex neural network structures can be envisaged with a layer that can be linked to a layer further away than the immediately preceding layer.

Each neuron is also associated with an operation, i.e. a type of processing, to be performed by said neuron within the corresponding processing layer.

Each layer is connected to the other layers by a plurality of synapses. A synaptic weight is associated with each synapse, thus forming the tunable parameters, and each synapse forms a link between two neurons. This is often a real number, taking on both positive and negative values. In some cases, the synaptic weight is a complex number.

Each neuron is able to perform a weighted sum of the value(s) received from the neurons of the preceding layer, each value then being multiplied by the respective synaptic weight of each synapse, or link, between said neuron and the neurons of the preceding layer, then to apply an activation function, typically a non-linear function, to said weighted sum, and to deliver at the output of said neuron, in particular to the neurons of the following layer connected to it, the value resulting from the application of the activation function. The activation function introduces a non-linearity into the processing performed by each neuron. The sigmoid function, the hyperbolic tangent function and the Heaviside function are examples of activation functions.

As an optional complement, each neuron is also able to apply a multiplicative factor, also known as bias, to the output of the activation function, and the value output by said neuron is then the product of the bias value and the value output by the activation function.

It is clear that the model architecture defines a naïve model. In other words, the tunable parameters of the model architecture are initialized to predefined values.

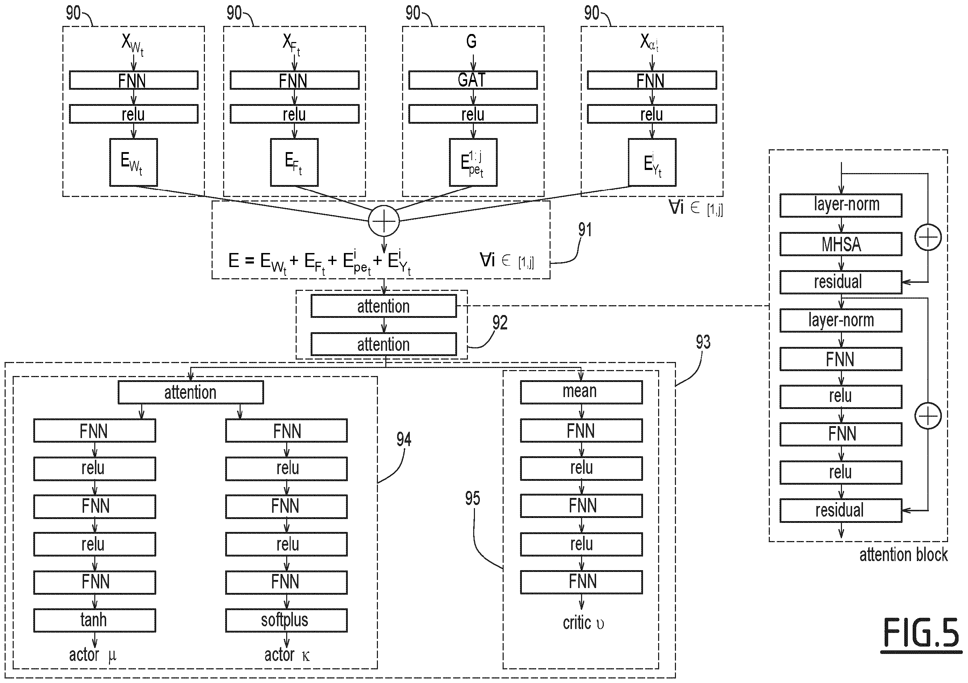

Figure 5 represents an example of a model architecture.

In this example, the model architecture comprises several units that comprise neural networks.

As an example, the model architecture comprises, for each input, an embedding unit 90 configured to form, for each of said input, an embedding *E_{Wₜ}, E_{Fₜ},* ${E}_{{pe}_{t}}^{1 : L} , {E}_{{Y}_{t}}^{i}$ in a latent space. Each embedding *E_{Wₜ}, E_{Fₜ},* ${E}_{{pe}_{t}}^{1 : L} , {E}_{{Y}_{t}}^{i}$ is preferably a vector having the same number of component as the other embeddings. As an example, the number of components of each embedding is 1024.

Advantageously, the embedding units 90 that are configured to receive the current wind parameters *X_{Wₜ},* the forecast wind parameters *X_{Fₜ},* and the yaw angle parameters ${X}_{{α}_{t}^{i}}$, comprise fully connected neural networks FNN. More advantageously, each of the embedding units comprise, following the fully connected neural network FNN, a ReLU activation function.

Advantageously, the embedding unit 90 respective of the graph *G* representative of the influence of the wind turbines on each others, comprises a Graph Attention Network, known *per se.* More advantageously, this embedding unit 90 further comprises a ReLU activation function. Preferably, the embedding unit 90 respective of the graph *G* provide an embedding ${E}_{{pe}_{t}}^{i}$ for each wind turbine 15i.

The embedding resulting from the graph *G* is also denoted positional encoding. Actually, the role of these embeddings is to encode, in a vector format, the position of each wind turbine 15i relative to each other, depending on the wind direction *Kₜ.*

To make parallel with Natural Language Processing, if the wind farm 10 may be associated to a sentence and each wind turbine 15i to each word of this sentence, the positional encodings make it possible to encode, in a vector format, a relative order of each word with respect to each other in the sentence. However, while it is simple and natural to determine such order in a sentence, it is more difficult in the present case. Hence, the embedding unit 90 respective to graph *G* will learn, by a training that is detailed below, how such order should be determined.

In same example, the model architecture comprises a merging unit 91 configured to merge the embeddings, to form, for each wind turbine 15i, a merged embedding ${E}_{t}^{i}$.

Preferably, the merging unit 91 is configured to sum, for each wind turbine 15i, the embedding ${E}_{{Y}_{t}}^{i}$ of the yaw angle parameters ${X}_{{α}_{t}^{i}}$ of this wind turbine 15i, with the embedding *E_{Wₜ}* of the current wind parameters *X_{Wₜ},* the embedding *E_{Fₜ}* of the wind forecast parameters *X_{Fₜ},* and the corresponding embedding ${E}_{{pe}_{t}}^{i}$ of the graph *G,* to form, for said wind turbine 15i, the respective merged embedding ${E}_{t}^{i}$.

Hence, the merging unit 91 is configured to form a number J of merged embeddings ${E}_{t}^{i}$, one for each wind turbine 15i.

In the same example, the model architecture further comprises the attention unit 92 configured to enhance each merged embedding ${E}_{t}^{i}$.

In particular, the attention unit 92 preferably comprises two successive attention blocks. Attention blocks have been developed in Natural Language Programming domain, more particularly in Transformers Neural Networks. They aims at determining a relative importance of each embedding ${E}_{t}^{i}$ to the others.

Attention blocks, and specifically multi-head self-attention networks that are considered here are a key component of modern artificial intelligence models, particularly in Transformer-based neural networks, which have revolutionized fields like Natural Language Processing (NLP). These networks are designed to analyze and understand relationships between different parts of a sentence or data sequence (like a group of turbines for example).

In NLP, instead of processing words one at a time, self-attention allows the model to focus on all words simultaneously, determining which ones are most relevant to each other. This mechanism helps the model understand context, such as how a word in one part of a sentence influences another word elsewhere. The multi-head aspect means that the model does not only rely on one perspective but looks at relationships from multiple angles at the same time. Each "head" captures different types of connections; one might focus on grammar, another on meaning.

In the context of the invention, the attention blocks perform the same thing except that the words are replacee by the wind turbine 15i, the sentence is replaced by the wind farm 10, the grammar is replaced by the wake effect and the meaning is replaced by the power output by the wind farm 10.

A particular example of attention block is detailed on the right part of Figure 4. In this particular example, each attention block comprises, according to the state of the art. In particular, in the shown example, it comprises a normalization layer (layer-norm), a multi-head self-attention layer (MHSA), a residual connection (Residual). Then, a fully connected neural network (FNN) is applied on each merged embedding ${E}_{t}^{i}$, going to a latent space four times larger than the embeddings'. Then a rectified linear unit (relu) is applied. Then another fully connected neural network (FNN) is applied on each merged embedding ${E}_{t}^{i}$, going back to the original size of the embeddings. Then another rectified linear unit (relu) is applied and a final residual connection is made.

In the same example, the model architecture comprises a post-treatment unit 93 configured to provide some values *µ*, *κ* representative of the rotation commands ${u}_{t}^{i}$ of the wind turbines 15i, as a function of the outputs of the attention unit 92.

In an embodiment, the post treatment unit 93 comprises, an actor sub-unit 94, and optionally a critic sub-unit 95.

The actor sub unit 94 is configured to provide, for a respective enhanced embedding, a measure of location *µ* and a measure of concentration *κ*, of respective rotation commands following a Von Mises probability law.

In this example, the actor sub-unit 94 comprises another attention block and then, two groups of networks in parallel. Each of this group of networks comprises three fully connected neural networks FNN separated from each other by a ReLU activation function.

The group of networks corresponding to the measure of location *µ* comprises a hyperbolic tangent activation function after the last fully connected neural network FNN.

The group of networks corresponding to the measure of concentration *κ* comprises a softplus activation function after the last fully connected neural network FNN.

The critic sub unit comprises a mean function reducing the enhanced embeddings to a single value. Then, similarly as for the groups of networks of the actor sub unit, the critic sub unit comprises three fully connected neural networks FNN separated from each other by a ReLU activation function. This critic sub unit is a common use in reinforcement learning.

Contrary to the group of networks of the actor sub unit 94, the critic sub unit output is provided directly by its last fully connected neural network FNN.

The first calculation module 47 is configured to train the model architecture according to a reinforcement learning technic implying tuning the tunable parameters of the model architecture to obtain a trained model optimizing a performance of the wind farm *Fᵣ.* The performance of the wind farm *Fᵣ,* that will be detailed below, depends on: an estimated power *Pₜ* output by wind farm and losses *L̅ₜ̅* due to wake effect if each wind turbine 15i of the wind farm 10 would be aligned with the wind direction *Kₜ.*

To this end, the first calculation module 47 is configured to determines a set of wind directions *K* and wind velocities *V.*

Preferably, the set of wind directions *K* is determined by sampling values regularly spaced from each other in the trigonometric circle. Preferably, the values of the wind velocities *V* are sampled randomly between two limit values.

The first calculation module 47 ins configured to generates, from the set of wind directions *K* and the set of wind velocities *V,* some time sets of wind directions ${\left\{{K}_{t + k}\right\}}_{k ∈ \left〚0; L\right〛}$ and velocities ${\left\{{V}_{t + k}\right\}}_{k ∈ \left〚0; L\right〛}$. This set is further denoted "episode". Each episode comprises, for a plurality of successive instants ${\left\{t+k\right\}}_{k ∈ \left〚0; L\right〛}$ one value of the wind direction *Kₜ₊ₖ* and one value of the wind velocity *Vₜ₊ₖ.*

Preferably again, the first calculation module 47 is configured to determine, based on the wind direction *Kₜ* at the first instant *t* of the episode, the graph G representative of the influence of the wind turbines on each other as respecting the already defined criteria.

The first calculation module 47 is further configured to train the model architecture based on each episode constructed.

The first sending module 48 is configured to send the trained model to the electronic control device 45.

The second receiving module 55 is preferably configured to receive the current yaw angle ${α}_{t}^{i}$ of each wind turbine 15i, preferably from the yaw actuator 40.

Preferably, the second receiving module 55 is in addition configured to receive, from the wind sensor 50, the estimated values of the wind directions ${\left\{K{′}_{t + k}\right\}}_{k ∈ \left〚0; L\right〛}$ and of the wind velocity ${\left\{V{′}_{t + k}\right\}}_{k ∈ \left〚0; L\right〛}$, for each instant of the set of successive time instants ${\left\{t+k\right\}}_{k ∈ \left〚0; L\right〛}$.

The second receiving module 55 is preferably configured to receive the trained model from the electronic training device 43.

The second calculating module 60 is preferably configured to obtain, from the current wind direction ${K}_{t}^{′}$, the corresponding graph, as detailed below.

The second calculating module 60 is preferably configured to apply the trained model to the received inputs *X_{Wₜ}, X_{Fₜ},* ${X}_{{α}_{t}^{i}}$ and to the graph G, to obtain a respective rotation command ${u}_{t}^{i}$.

The second sending module 65 is configured to send, to each yaw actuator 40, the respective rotation command ${u}_{t}^{i}$, so that said yaw actuator 40 implement it.

The functioning of the wind farm 10 and in particular of the control system 20 will now be detailed in reference to figure 5 illustrating a flowchart of the control method 100.

The control method 100 comprises a learning phase 1100 implemented by the learning device 43, and an exploitation phase 1200 implemented by the control device 45. Preferably, the learning phase 1100 is implemented in labs, before the exploitation phase 1200.

The learning phase comprises a receiving step 1110, wherein the first receiving module 46 receives the model architecture, preferably from an external system.

The learning phase further comprises a training step 1120 of the model architecture according to a reinforcement learning technic implying tuning the tunable parameters of the model architecture to obtain a trained model optimizing the performance of the wind farm.

The performance of the wind farm *Fᵣ* comprises, for each time instant of the set of successive time instants, a reward *r*(*t*). Preferably, the performance of the wind farm *Fᵣ* is the sum of the rewards *r*(*t*) of each instant of the set of successive time instants.

Each reward preferably comprises, a power component *r_{power}*(*t*) and a misalignment component *r_{misalignment}*(*t*).

The power component *r_{power}*(*t*) depends on the estimated power *Pₜ* and estimated losses *L̅ₜ̅* for the wind turbines 15i having a respective yaw angle ${α}_{t}^{i}$ within the predefined range [*αₘᵢₙ* ; *αₘₐₓ*]·

In particular, the power component *r_{power}*(*t*) depends:
- on the power *Pₜ* output by the wind farm 10, if said power *Pₜ* is greater than the power *P̅ₜ* output by a respective wind farm 10 having each of its wind turbines 15i aligned with the wind direction ${K}_{t}^{′}$, or
- on said power *Pₜ* output by the wind farm 10 and on the losses *L̅ₜ̅* due to wake effect, else case.

According to an example, the power component *r_{power}*(*t*) is preferably equal to: 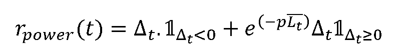 with ${Δ}_{t} = \left(\frac{{P}_{t} - \overline{{P}_{t}}}{\overline{{P}_{t}} + ϵ}\right) ,$ where:
- *Pₜ* is the estimated power output by the wind farm wherein each wind turbine 15i has the yaw angle ${α}_{t}^{i}$,
- *P̅ₜ̅* is the power outpu by the wind farm if each wind turbine 15i is aligned with the wind direction,
- *ε* is a predefined constant, avoiding a division by 0 in case the value *P̅ₜ̅* would be equal to 0
- 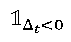 is the indicative function which is equal to 1 if the value Δ*ₜ* is strictly negative and 0 else case,
- L̅*̅ₜ̅*̅ is the losses due to wake effect if each wind turbine of the wind farm would be aligned with the wind direction,
- p is a predefined constant, and
- 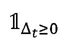 is the indicative function which is equal to 1 if the value Δ*ₜ* is greater or equal to zero, and 0 else case.

The misalignment component *r_{misalignmet}*(*t*) depends on the yaw angle ${α}_{t}^{i}$ of each wind turbine 15i having a respective yaw angle ${α}_{t}^{i}$ out of the predefined range.

In an embodiment, the misalignment component *r_{misalignment}*(*t*) is equal to: 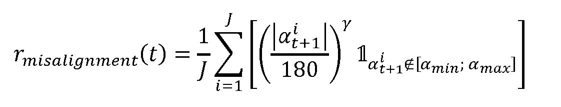 where:
- *J* is the number of wind turbines (15i) in the wind farm,
- ${α}_{t + 1}^{i}$ is the yaw angle of the i-th wind turbine (15i) at the time instant *t +* 1,
- ${Σ}_{i = 1}^{J}$ is the sum for each wind turbine (15i),
- *γ* is a predefined discount factor, for example equal to 3,
- 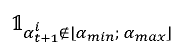 is the indicative function which is equal to 1 if the yawn angle ${α}_{t + 1}^{i}$ is out of the predefined range (*αₘᵢₙ, αₘₐₓ*), and zero else case.

Finally, the performance of the wind farm may be formulated as follow: ${F}_{r} = {\sum }_{k = 0}^{L} {β}^{k} . r \left(t+k\right) = {\sum }_{k = 0}^{L} {β}^{k} . \left[{w}_{1}.{r}_{misalignment}\left(t+k\right)+{w}_{2}.{r}_{power}\left(t+k\right)\right]$ where *w*₁ and *w*₂ are predefined weighting,
and *β* is a predefined quantity between 0 and 1 so that the performance is more influence by the current reward *r*(*t*) that by a rewards *r*(*t + k*) in long future.

With such a performance of the wind farm *Fᵣ,* the misalignment component *r_{misalignment}*(*t*) makes it possible to penalize the performance of the wind farm *Fᵣ* if the yaw angle ${α}_{t}^{i}$ of one of more wind turbines 15i are too far from the predefined range [*αₘₐₓ*; *αₘᵢₙ*]. Actually, as explained before, the wind turbine actuator can only make the yaw angle ${α}_{t}^{i}$ of each wind turbine 15i varying by few degrees by minutes. Hence, it is preferred that the yaw angle ${α}_{t}^{i}$ of turbines are not too far from the predefined range so that it can reach it at next instants.

In addition, with such performance of the wind farm *Fᵣ,* the power component *r_{power}*(*t*) makes it possible to take into account the wake effect. Actually, having a value of Δ*ₜ* close to zero only means that the power output by the wind farm, in the specific configuration for which the temporal component is determined, is equal to the power output by the same wind farm if each wind turbine is facing the wind direction.

Hence, one may notice that, in some case wherein the wake effect would be low, the configuration wherein each wind turbine is facing the wind direction may be the optimal configuration.

Thus, the inclusion of the losses due to the wake effect in the power component *r_{power}*(*t*) makes it possible to distinguish a case wherein Δ*ₜ* is close to 0 for good reasons (i.e. because the losses are really low) and the case wherein Δ*ₜ* is close to 0 because the power production can be improved.

During the training step 1120, the first calculation module 47 the episode as already described and obtains for each episode a respective graph G, as previously described.

During the training step 1120, the first calculation module 47 estimates for a given wind direction, the losses *L̅ₜ̅* due to wake effect if each wind turbine is facing the wind direction. To this end, the first calculation module 47 preferably uses a low-fidelity simulator such as FLORIS, known *per se.*

In addition, the first calculation module 47 estimated the power *P̅ₜ̅* output by the wind farm if each wind turbine is facing the wind direction. To this end, the first calculation module 47 preferably uses a low fidelity simulator such as the simulator *Floris,* known *per se.*

During the training step 1120, the first calculation module applies the reinforcement learning technic to the model architecture from the time sets, from the respective graph and from the set of yaw angle values.

To this end, the first calculation module 47 for example applies a Proximal Policy Optimization algorithm, also denoted PPO algorithm. This algorithm is known *per se.* This algorithm implies several evaluation of the performance of the wind farm *Fᵣ.* During such evaluation, the first calculation module 47 computes the power *Pₜ* output by the wind farm 10 in the considered configuration based on the low fidelity simulator. The Proximal Policy Optimization consists in tuning the tunable parameters of the model architecture to obtain the trained model so that when the following inputs are provided to the trained model, the trained model provide some outputs representative of the rotation command to be implemented at the current instant *t* that would optimize the performance of the wind farm *Fᵣ.*

Preferably, the learning phase 1100 further comprises a first sending step 1130, wherein the first sending module 48 sends the trained model to the electronic control device 45.

The control method 100 further comprises the exploitation phase 1200.

Initially, during the exploitation phase 1200, the wind is flowing through the wind farm 10 according to the wind direction *Kₜ* and the wind velocity *Vₜ.* The wind sensor 50 measures and estimates the wind directions ${\left\{K{′}_{t + k}\right\}}_{k ∈ \left〚0; L\right〛}$ and the wind velocity ${\left\{V{′}_{t + k}\right\}}_{k ∈ \left〚0; L\right〛}$ reaching the wind farm 10 for each instant successive time instants ${\left\{t+k\right\}}_{k ∈ \left〚0; L\right〛}$, over a predefined horizon L+1. At the first instant *t*, each wind turbine 15i has an orientation with the wind direction ${K}_{t}^{′}$ forming a yaw angle ${α}_{t}^{i}$.

The exploitation phase 1200 comprises a second receiving step 1210.

During the second receiving step 1210, the second receiving module 55 receives the current yaw angle ${α}_{t}^{i}$ of each wind turbines 15i, for example from the yaw actuator 40.

During the second receiving step 1210, the second receiving module 55 receives the estimated wind directions ${\left\{K{′}_{t + k}\right\}}_{k ∈ \left〚0; L\right〛}$ and the wind velocity ${\left\{V{′}_{t + k}\right\}}_{k ∈ \left〚0; L\right〛}$ for each instant successive time instants ${\left\{t+k\right\}}_{k ∈ \left〚0; L\right〛}$, preferably from the wind sensor 50.

During the second receiving step 1210, the second receiving module 55 receives the trained model that results from the training of the electronic learning device 43, preferably from the first sending module 48.

The exploitation phase 1200 then comprises an obtaining step 1220, wherein the second calculating module 60 obtains the graph G representative of the influence of the wind turbines 15i on each other. This graph G is for example obtained as previously described in the training step 1120 except that it is made from the estimated wind direction ${K}_{t}^{′}$ of the current instant *t.*

The exploitation phase 1200 then comprises an applying step 1230 wherein the second calculation module 60 applies the trained model to the received inputs.

In particular, during the applying step 1230, the second calculation module 60 generate, from the received quantities:
- the current wind parameters *X_{Wₜ}*, including the current wind velocity ${V}_{t}^{′}$ and the current wind direction ${K}_{t}^{′}$*,*
- the wind forecast parameters *X_{Fₜ}* including the estimated wind directions ${\left\{K{′}_{t + k}\right\}}_{k ∈ \left〚1; L\right〛}$ and the estimated wind velocities ${\left\{V{′}_{t + k}\right\}}_{k ∈ \left〚1; L\right〛}$ of each further instant *t + k* in the set of successive time instants ${\left\{t+k\right\}}_{k ∈ \left〚1; L\right〛}$,
- the yaw angle parameters ${X}_{{α}_{t}^{i}}$ of each wind turbine 15i, preferably in the form of its sinus and its cosine,
- the graph G representative of the influence of the wind turbines 15i on each other.

The second calculation module 60 then obtains, at the output of the trained model, for each wind turbine 15i, the measure of location *µ* and the measure of concentration *κ* of the Von Mises law that the rotation command should follow.

Preferably, the second calculation module 60 determines, for each wind turbine 15i, the rotation command ${u}_{t}^{i}$ as the corresponding measure of location *µ.*

The exploitation phase 1200 further comprises a second sending step 1240, wherein the second sending module 65 sends, to each wind turbine 15i, the respective rotation command ${u}_{t}^{i}$ for the rotation of the wind turbine 15i. Preferably, the second sending module 65 sends to the yaw actuator 40 of each wind turbines 15i, the corresponding rotation command ${u}_{t}^{i}$.

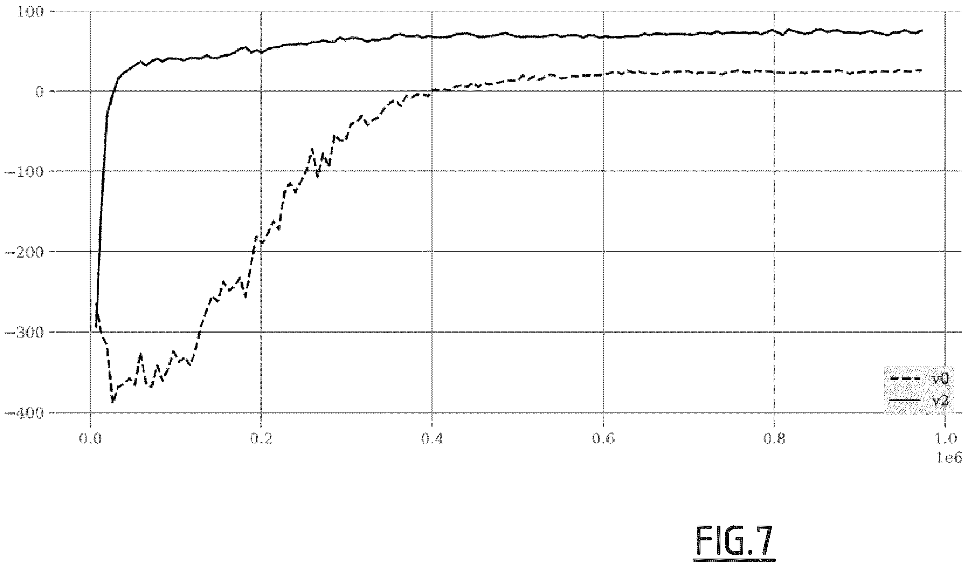

Figure 7 represents the evolution of rewards as a function of the number of simulated time step during a learning process. Figure 7 compare the evolution of the rewards during a learning of the model architecture according to the invention (v2), in solid line, and the reward of model architecture according to the state of the art only comprising fully connected neural networks (v0), in dashed line.

One may notice that the model architecture according to the invention, with the considered reward, converge way faster that the model from the state of the art since it requires less steps to reach its final value.

According to a not-shown variant, the wind sensor is configured to measure and/or estimate more parameters than just the estimated wind velocity ${V}_{t}^{′}$ and the estimated wind direction ${K}_{t}^{′}$. In particular, according to said variant, the wind sensor is further configured to measure/estimate the wind turbulence, the temperature and/or the air density.

According to said variant, the current wind parameters *X_{Wₜ}* and or the wind forecast parameters *X_{Fₜ}* comprise the or at least one of the lastly named quantities.

It is clear that the model architecture and the trained model are thus configured to receive these quantities in the current wind parameters *X_{Wₜ}* and/or in the wind forecast parameters *X_{Fₜ}.*

## Claims

1. A control method (100) for controlling a wind farm (10) comprising a plurality of wind turbines (15i), based on a plurality of estimated general wind velocities ( ${\left\{{V}_{t + k}^{′}\right\}}_{k ∈ \left〚0; L\right〛}$) and a plurality of estimated wind directions ( ${\left\{{K}_{t + k}^{′}\right\}}_{k ∈ \left〚0; L\right〛}$) of the wind (W) on the wind farm (10),
each wind turbine (15i) having an orientation (R) forming, with the wind directions ( ${\left\{{K}_{t + k}^{′}\right\}}_{k ∈ \left〚0; L\right〛}$), an angle denoted yaw angle ( ${α}_{t}^{i}$),
each wind turbine (15i) being configured, upon receiving a rotation command ( ${u}_{t}^{i}$), to rotate, around an elongation axis (E) respective of the wind turbine (15i), according to said rotation command ( ${u}_{t}^{i}$),
the method being implemented by an electronic control system (20) and comprising a learning phase (1100) comprising the following steps:
- receiving (1110) a model architecture forming a structure of a model aiming at being configured to determine, for each wind turbine (15i), the rotation command ( ${u}_{t}^{i}$) as a function of inputs representatives of the estimated wind velocities, the estimated wind direction and the current yaw angles,
the model architecture comprising several neural network units including respectively tunable parameters, at least one these unit being an attention unit comprising at least on multi-head self-attention neural network,
- training (1120) the model architecture according to a reinforcement learning technic implying tuning the tunable parameters of the model architecture to obtain a trained model optimizing a performance of the wind farm (*Fᵣ*), the performance of the wind farm (*Fᵣ*) depending on:
∘ an estimated power (*Pₜ*) output by the wind farm, and
∘ losses (*L̅ₜ̅*) due to wake effect if each wind turbine (15i) of the wind farm (10) would be aligned with the wind direction (*Kₜ*),
the method (100) further comprises an exploitation phase (1200) comprising the following steps:
- receiving (1210) the estimated wind velocity ( ${\left\{{V}_{t + k}^{′}\right\}}_{k ∈ \left〚0; L\right〛}$) and the estimated direction ( ${\left\{{K}_{t + k}^{′}\right\}}_{k ∈ \left〚0; L\right〛}$) for each time instant of the successive time instants ( ${\left\{t+k\right\}}_{k ∈ \left〚0; L\right〛}$), and the current yaw angle ( ${α}_{t}^{i}$) of each wind turbine,
- applying (1230) the trained model to parameters (*X_{Wₜ}, X_{Fₜ}, G,* ${X}_{{α}_{t}^{i}}$) formed from the received wind velocities ( ${\left\{{V}_{t + k}^{′}\right\}}_{k ∈ \left〚0; L\right〛}$), wind directions ( ${\left\{{K}_{t + k}^{′}\right\}}_{k ∈ \left〚0; L\right〛}$), and current yaw angles ( ${α}_{t}^{i}$), to derive, for each wind turbine (15i), the respective rotation command ( ${u}_{t}^{i}$),
- sending (1240) to each wind turbine (15i), the respective rotation command ( ${u}_{t}^{i}$) for the rotation of the wind turbine (15i).

2. The control method (100) according to claim 1, wherein each wind turbine (15i) is able to output power only if its yaw angle ( ${α}_{t}^{i}$) is within a predefined range ([*αₘᵢₙ*; *αₘₐₓ*]),
the performance of the wind farm (*Fᵣ*) comprising, for each time instant (*t*) of the set of successive time instants ( ${\left\{t+k\right\}}_{k ∈ \left〚0; L\right〛}$), a reward (*r*(*t*)),
each reward (*r*(*t*)) comprising: a power component (*r_{power}*(*t*)) and a misalignment component (*r_{misalignment}*(*t*)),
the power component (*r_{power}*(*t*)) depending on said estimated power (*Pₜ*) and estimated losses (*L̅ₜ̅*) for the wind turbines (15i) having a respective yaw angle ( ${α}_{t}^{i}$) within the predefined range ([*αₘᵢₙ*; *αₘₐₓ*]),
the misalignment component (*r_{misalignment}*(*t*)) depending on the yaw angle ( ${α}_{t}^{i}$) of each wind turbine (15i) having a respective yaw angle ( ${α}_{t}^{i}$) out of the predefined range ([*αₘᵢₙ*; *αₘₐₓ*]).

3. The control method (100) according to claim 2, wherein the power component (*r_{power}*(*t*)) depends:
- on the power output (*Pₜ*) by the wind farm (10), if said power (*Pₜ*) is greater than the power (*P̅ₜ̅*) output by a respective wind farm (10) having each of its wind turbines (15i) aligned with the wind direction ( ${K}_{t}^{′}$), or
- on said power output (*Pₜ*) by the wind farm (10) and on the losses (*L̅ₜ̅*) due to wake effect, else case.

4. The control method (100) according to claim 2 or 3, wherein the power component (*r_{power}*(*t*)) is equal to: 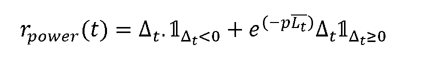 with ${Δ}_{t} = \left(\frac{{P}_{t} - \overline{{P}_{t}}}{\overline{{P}_{t}} + ϵ}\right) ,$ where:
- *Pₜ* is the estimated power output by the wind farm (10) wherein each wind turbine (15i) has the yaw angle equal to ${α}_{t}^{i}$,
- *P̅ₜ̅* is the power output by the wind farm (10) if each wind turbine (15i) is aligned with the estimated wind direction ( ${K}_{t}^{′}$),
- *ε* is a predefined constant,
- 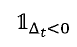 is the indicative function which is equal to 1 if the value Δ*ₜ* is strictly negative and 0 else case,
- L̅*̅ₜ̅*̅ is the losses due to wake effect if each wind turbine of the wind farm would be aligned with the estimated wind direction ( ${K}_{t}^{′}$),
- *p* is a predefined constant, and
- 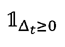 is the indicative function which is equal to 1 if the value Δ*ₜ* is greater or equal to zero, and 0 else case.

5. The control method (100) according to any of claims 2 to 4, wherein the misalignment component (*r_{misalignment}*(*t*)) is equal to: 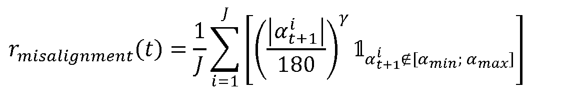 where:
- *J* is the number of wind turbines (15i) in the wind farm (10),
- ${α}_{t + 1}^{i}$ is the yaw angle of the i-th wind turbine (15i) at the time instant *t +* 1,
- ${Σ}_{i = 1}^{J}$ is the sum for each wind turbine (15i),
- *γ* is a predefined discount factor,
- 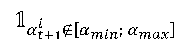 is the indicative function which is equal to 1 if the yawn angle ${α}_{t + 1}^{i}$ is out of the predefined range ([*αₘᵢₙ*, *αₘₐₓ*]), and zero else case.

6. The control method (100) according to any of the preceding claims, wherein the model architecture and the trained model are configured to receive as input a graph (G) representative of the influence of the wind turbines (15i) on each other,
the exploitation phase (1200), further comprising an obtaining step (1220) of the graph (G), said graph (G) depending the current wind direction ( ${K}_{t}^{′}$),
during the applying step (1230), the trained model being further applied to the obtained graph (G).

7. The control method according to any of the preceding claims, wherein the model architecture and the trained model are configured to receive as input:
∘ current wind parameters (*X_{Wₜ})* including the current wind velocity ( ${V}_{t}^{′}$) and the current wind direction ( ${K}_{t}^{′}$),
∘ wind forecast parameters (*X_{Fₜ}*) including the estimated wind directions ( ${\left\{K{′}_{t + k}\right\}}_{k ∈ \left〚1; L\right〛}$) and the estimated wind velocities ( ${\left\{V{′}_{t + k}\right\}}_{k ∈ \left〚1; L\right〛}$) of each further instant ( ${\left\{t+k\right\}}_{k ∈ \left〚1; L\right〛}$) in the set of successive time instants,
∘ yaw angle parameters ( ${X}_{{α}_{t}^{i}}$) comprising a current value of a yaw angle ( ${α}_{t}^{i}$) of each wind turbine (15i).

8. The control method (100) according to any of the preceding claims, wherein the model architecture comprises:
- for each input, an embedding unit (90) configured to form, for each of input, an embedding in a latent space,
each embedding being a vector having the same number of component as the other embeddings,
- a merging unit (91) configured to merge the embeddings, to form, for each wind turbine (15i), a respective merged embedding,
- the attention unit (92) configured to enhance each merged embedding, and
- one or more post-treatment units (93) configured to provide some values representative of the control rotations ( ${u}_{t}^{i}$), as a function of an output of the attention unit (92).

9. The control method (100) according to claim 6, 7 and 8, wherein for; current wind parameters (*X_{Wₜ}*), the wind forecast parameters (*X_{Fₜ}*) and the yaw angle parameters ( ${X}_{{α}_{t}^{i}}$), the respective embedding unit comprises a fully connected neural network,
the embedding unit respective of the graph (G) comprising a Graph Attention Network.

10. The control method according to claim 8 or 9, wherein the merging unit (91) is configured to sum, for each wind turbine (15i), embedding of the yaw angle parameters ( ${X}_{{α}_{t}^{i}}$) of this wind turbine (15i), with the embedding of the current wind parameters (*X_{Wₜ}*), the embedding of the wind forecast parameters (*X_{Fₜ}*), and the embedding of the graph (G), to form, for said wind turbine (15i), the respective merged embedding.

11. The control method (100) according to any of claim 8 to 10, wherein the post treatment unit(s) (93) comprises an actor sub-unit (94),
the actor sub unit (94) is configured to provide, from a respective enhanced embedding, a measure of location (*µ*) and, a measure of concentration (*κ*), of respective rotation commands ( ${u}_{t}^{i}$) following a Von Mises probability law.

12. The control method (100) according to claim 11, wherein during the applying step (1230) of the exploitation phase (1200), each rotation command ( ${u}_{t}^{i}$) is derived as the corresponding measure of location (*µ*).

13. The control method (100) according to any of the claim 6, 9 or 10, wherein the graph (G) comprises nodes and directed edges, each directed edge extending from a node to another node,
each node corresponding to a wind turbine (15i) of the wind farm (10), to each node being associated the current yaw angle ( ${α}_{t}^{i}$) of the corresponding wind turbine (15i), to each directed edges being associated:
- a distance between the two wind turbines (15i) connected by said directed edge, and
- an angle (*ζ^{i,j}*) formed between the estimated wind direction ( ${K}_{t}^{′}$) at the current instant (t) and a segment linking said two wind turbines (15i) in the wind farm (10).

14. A computer program product comprising software instructions which, when being executed by a computer system, implement a control method (100) according to any of the preceding claims.

15. An electronic control system (20) for controlling a wind farm (10) comprising a plurality of wind turbines (15i), based on a plurality of estimated general wind velocities ( ${\left\{{V}_{t + k}^{′}\right\}}_{k ∈ \left〚0; L\right〛}$) and a plurality of estimated wind directions ( ${\left\{{K}_{t + k}^{′}\right\}}_{k ∈ \left〚0; L\right〛}$) of the wind (W) on the wind farm (10),
each wind turbine (15i) having an orientation (R) forming, with the wind directions ( ${\left\{{K}_{t + k}^{′}\right\}}_{k ∈ \left〚0; L\right〛}$), an angle denoted yaw angle ( ${α}_{t}^{i}$),
each wind turbine (15i) being configured, upon receiving a rotation command ( ${u}_{t}^{i}$), to rotate, around an elongation axis (E) respective of the wind turbine (15i), according to said rotation command ( ${u}_{t}^{i}$),
the electronic control system (20) comprising an electronic learning device (43) comprising:
- a first rereiving module (46) configured to receive a model architecture forming a structure of a model aiming at being configured to determine, for each wind turbine (15i), the rotation command ( ${u}_{t}^{i}$) as a function of inputs representatives of the estimated wind velocities, the estimated wind direction and the current yaw angles, the model architecture comprising several neural network units including respectively tunable parameters, at least one these unit being an attention unit comprising at least on multi-head self-attention neural network,
- a first calculating module (47) configured to train the model architecture according to a reinforcement learning technic implying tuning the tunable parameters of the model architecture to obtain a trained model optimizing a performance of the wind farm (*Fᵣ*), the performance of the wind farm (*Fᵣ*) depending on:
∘ an estimated power (*Pₜ*) output by the wind farm, and
∘ losses (*L̅ₜ̅*) due to wake effect if each wind turbine (15i) of the wind farm (10) would be aligned with the wind direction (*Kₜ*),
the electronic control system (20) further comprising an electronic control device (45) comprising:
- a second receiving module (55) configured to receive the estimated wind velocity ( ${\left\{{V}_{t + k}^{′}\right\}}_{k ∈ \left〚0; L\right〛}$) and the estimated direction ( ${\left\{{K}_{t + k}^{′}\right\}}_{k ∈ \left〚0; L\right〛}$) for each time instant of the successive time instants ( ${\left\{t+k\right\}}_{k ∈ \left〚0; L\right〛}$), and the current yaw angle ( ${α}_{t}^{i}$) of each wind turbine,
- a second calculating module (60) configured to apply the trained model to parameters (*X_{Wₜ}*, *X_{Fₜ}, G,* ${X}_{{α}_{t}^{i}}$) formed from the received wind velocities ( ${\left\{{V}_{t + k}^{′}\right\}}_{k ∈ \left〚0; L\right〛}$), wind directions ( ${\left\{{K}_{t + k}^{′}\right\}}_{k ∈ \left〚0; L\right〛}$), and current yaw angles ( ${α}_{t}^{i}$), to derive, for each wind turbine (15i), the respective rotation command ( ${u}_{t}^{i}$),
- a sending module (65) configured to send, to each wind turbine (15i), the respective rotation command ( ${u}_{t}^{i}$) for the rotation of the wind turbine (15i).
